# EUROPEAN PATENT SPECIFICATION

(11) **EP 1 343 704 B1**
(45) Date of publication and mention of the grant of the patent: **11.08.2004**
(21) Application number: 01272428.2
(22) Date of filing: 20.12.2001
(51) Int. Cl.: B65D 88/12

(54) **SYSTEM FOR LOADING AND UNLOADING OF VEHICLES**
SYSTEM ZUM LADEN UND ENTLADEN VON FAHRZEUGEN
SYSTEME DE CHARGEMENT ET DECHARGEMENT D'AUTOMOBILES

(30) Priority: 22.12.2000 SE 0004855
(43) Date of publication of application: 17.09.2003
(73) Proprietor: TTS Ships Equipment AB, 411 04 Göteborg (SE)
(72) Inventor: LYRSTRAND, Michel, S-431 64 Mölndal (SE); SALEN, Hans, S-430 85 Brännö (SE)
(74) Representative: Cederbom, Hans Erik August
(86) International application number: PCT/SE2001/002865
(87) International publication number: WO 2002/051722

(56) References cited:
- WO-A1-00/69677
- WO-A1-81/01997
- US-A- 5 599 153

## Description

The present invention relates to a system for loading and unloading vehicles in conjunction with transport of the vehicles by means of ships or other vessels or transport vehicles.

The transport of vehicles by ship takes place unprotected on the cargo deck of the ships, and they are secured to the deck of the ship with the help of lashing devices. The vehicles can be easily damaged in this way. Loading and unloading of the vehicles also takes a long time with the aforementioned previously disclosed systems. Driving passenger cars on board one by one from the quay takes a long time, is labour-intensive and is also detrimental to the environment, since the cars are driven into the inside of the ship using the cars' own engines, which spew out exhaust gases inside the ship.

A study has revealed that it took eight minutes for a so-called tugmaster to load an ordinary cassette with a load in the form of paper. It would thus be desirable to find a solution to the problem of transporting several cars at the same time with the help of a common load vehicle.

Previously disclosed through closest prior at US 5,599,153A, however, are a method and an arrangement for loading and unloading vehicles that are transported by ship. This makes use of "car racks", which comprise several levels and in which the vehicles are transported standing in the longitudinal direction of the car rack. The car racks are connected to one another for this purpose at their mutually opposing short sides for common handling during loading and unloading. Wheel tracks in the car racks facilitate driving the vehicles into them in their longitudinal direction, and each car rack is equipped with wheels on its under side to enable it to be driven onto a base.

Driving the vehicles into the car racks in the longitudinal direction calls for large areas to be available to the sides, in view of the long distances over which the vehicles are driven in.

Adaptation of the lateral distances between the vehicles inside the car rack is thus not possible, which precludes the possibility of saving space when transporting smaller vehicles. Transport of the car rack between the quay and the ship in this previously disclosed method takes place either with the help of a lifting arrangement in the form of a container crane or on the ground with the car rack's own wheels.

The dimensions of the car racks in question are not fixed, and they can be of any size depending on whether they are manufactured to accommodate a single row of vehicles inside or several rows next to one another. No possibility is offered of efficient cargo accommodation in ships with efficient stowing of such car racks together with other cargo containers. Furthermore, the vehicles that are accommodated in such car racks are affected in an adverse fashion, given that the greatest stresses in ships act in a transverse direction. The vehicles are accordingly exposed to the risk of colliding with one another and suffering damage due to movement of their suspension when subjected to forces acting transversely to the longitudinal direction of the vehicle. This can be expensive in the case of deliveries of new vehicles from the car factory to overseas customers and must accordingly be avoided to the greatest possible extent, or at least minimized.

The principal object of the present invention is thus, in the first instance, to solve the aforementioned problem by simple and reliably functioning means and measures.

The aforementioned object is achieved by means of a system in accordance with the present invention, which is characterized essentially in that supported on a cargo cassette is a frame, which comprises at least two levels for accommodating vehicles standing thereon transversely to the longitudinal direction of the cargo cassette, in that the sides and roof of the frame exhibit protective covering, in that openings for vehicles are present in the frame along its long sides which face away from one another, in that the width of the frame is equivalent to double the width of a standard cassette, in that the length of the frame is essentially equivalent to the length of a standard cassette, and in that ramps extend from the sides of the frame up to the respective level of the frame to permit vehicles intended for loading to be driven up onto, and loaded vehicles to be driven down from the frame and its respective vehicle accommodating point.

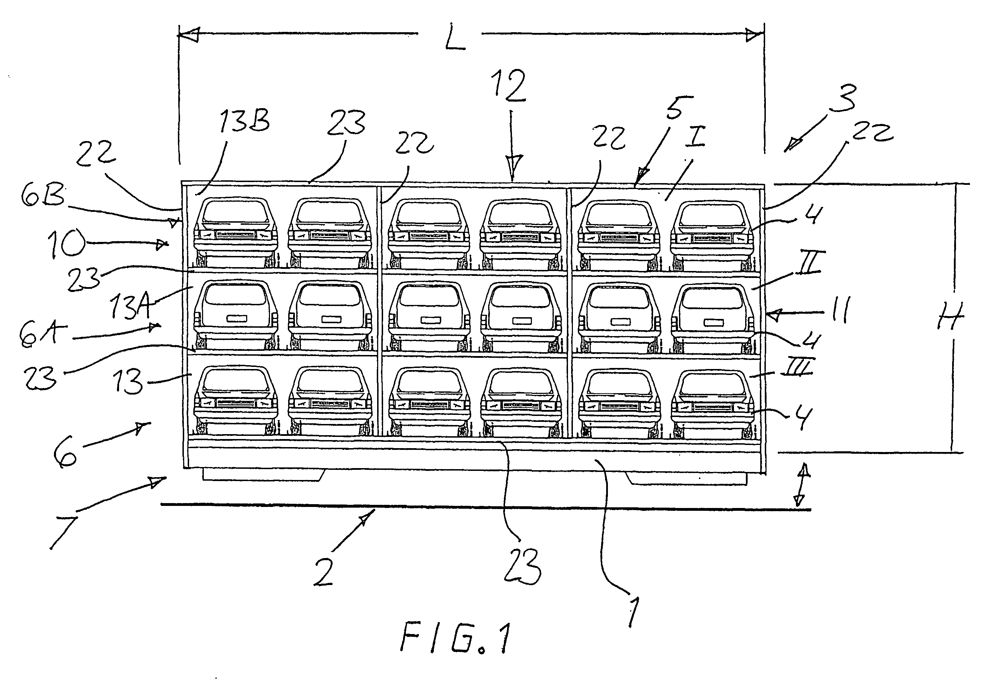

The present invention is described below as a preferred illustrative embodiment, in conjunction with which reference is made to the accompanying drawings, in which
Fig. 1 shows a side view of a so-called "car rack" filled with loaded passenger cars;

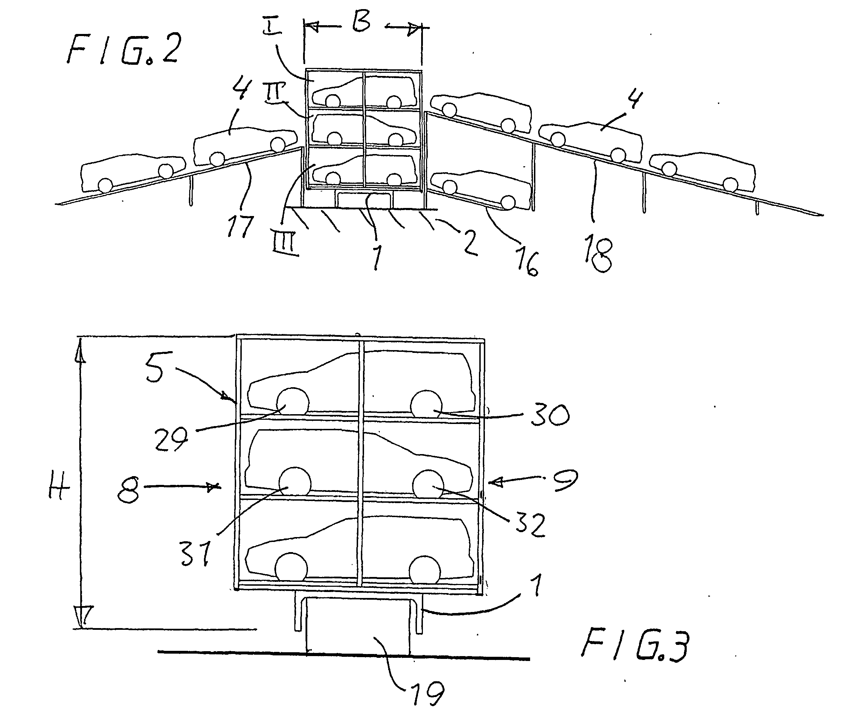

Fig. 2 shows a ramp arrangement in accordance with the invention;
Fig. 3 shows a cross-sectional view of a filled "car rack£;
Fig. 4 shows an arrangement of wheel track beams capable of lateral adjustment;
Fig. 5 shows a sectioned view of a wheel track beam equipped with a vehicle securing arrangement;
Fig. 6 shows another example of a vehicle securing arrangement;
Fig. 7 shows a perspective view of a system in the effective loading position;
Fig. 8 shows unloading of vehicles from a Ro-Ro ship;
Fig. 9 shows cargo handling of vehicles with the help of a loading crane; and
Fig. 10 shows unloading of vehicles in accordance with the invention.

Previously disclosed cargo cassettes 1, which are intended to be applied in accordance with the present invention and are so arranged as to be capable of being transported on a base 2 with the help of a so-called translifter and tugmaster or by means of other suitable mobile lifting apparatus, are normally used to carry paper or steel slabs or to support containers or cargo containers in single or double layers. Loading in this case takes place in a single width and in length modules, for example 2.6 metres wide and 12.25 metres long.

The underlying idea of the present invention is thus to utilize an ordinary cargo cassette 1, which is used for cargos of paper and steel, at the bottom and to cause this to support a cargo arrangement.

The invention relates to a loading and unloading system 3 for passenger cars 4 or other vehicles which lend themselves to bulk transport in conjunction with transport of the vehicles 4 by means of a ship 15 or other vessels or transport vehicles. In accordance with the invention, a cargo arrangement in the form of a frame 5 is supported on a cargo cassette 1 essentially of a previously disclosed kind.

The aforementioned frame 5 comprises at least two levels 6, 6A, 6B, which are so arranged as to accommodate vehicles 4 standing thereon. In the illustrated examples there are three levels 6, 6A, 6B, and the overall height H of the resulting cargo unit 7 is thus 5.40 metres. The height of the cassette 1 is additional, at 0.85 metre. I.e. the total height of the entire load is 6.25 metres.

The sides 8, 9, 10, 11 and the roof 12 of the frame 5 exhibit a protective covering 14 in the form of preferably flexible tarpaulin. The protective covering can be removed or attached, respectively before loading and after loading, at transcurrent openings 13, 13A, 13B in the aforementioned frame 5 along its long sides 8, 9 which face away from one another. For example, the protective covering 14 can be in the form of roller curtains or sections capable of attachment with buttons. The width of a normal passenger car is ca. 1.8 metres, whereas the modular width of a cargo module is between 2.40 and 2.60 metres. It is thus preferable and more efficient to cause the vehicles to be drawn up in a cargo accommodating container of this kind transversely to its longitudinal direction and packed closely side by side, i.e. the longitudinal direction of the packed vehicles is perpendicular in relation to the aforementioned frame 5 and cassette 1. Effective utilization of the spaces on board is achieved in this way, and standard containers can be loaded alongside frames containing vehicles by the use of so-called block stowing. The width B of the aforementioned frame 5 is thus selected so that it is essentially equivalent to double the width of a standard cassette.

The length L of the aforementioned frame 5 is in turn selected so that it is essentially equivalent to the length of a standard cassette.

A number of ramps 16, 17, 18 is provided to permit vehicles 4¹ intended for loading to be driven up onto the frame 5, and to permit already loaded vehicles 4 to be driven from the frame 5 and its respective vehicle accommodating places I, II, III, etc., inside the interior of the frame 5.

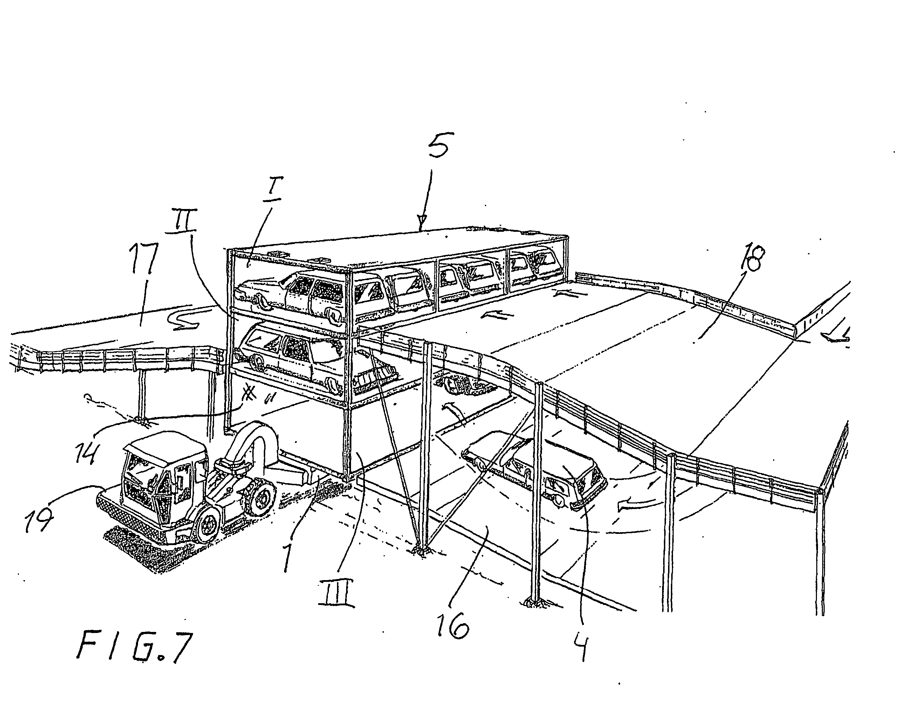

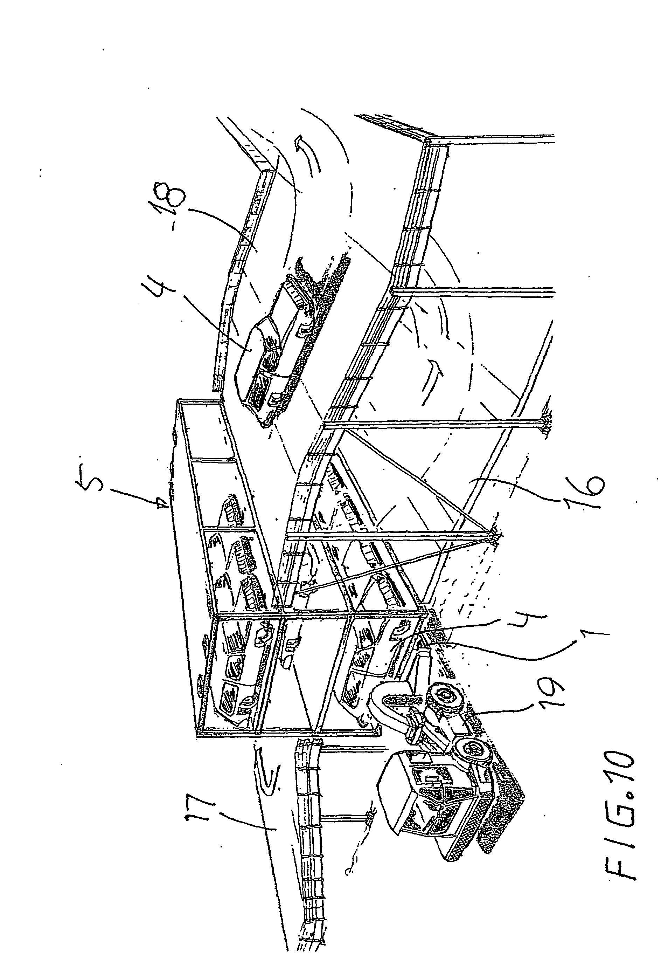

Driving vehicles into a loading unit facing alternately through 180° permits the vehicles to be driven out onto the ramps 16-18 with the vehicle travelling forwards; see Figs. 7 and 10.

In the example three different levels 6, 6A, 6B are so arranged as to accommodate the vehicle cargo thereon in the aforementioned frame 5.

The resulting loading unit 7 will thus have the following dimensions:
length L = 12.25 metres, for a 40' standard container;
width B = 5.2 metres; and
height H = ca. 5.40 metres,
and it is possible to load up to 18 passenger cars at the same time, safely and protected, in this module.

Transport of the loading unit 7 is intended to take place by means of a so-called translifter and tugmaster 19, or the frame 5 can be lifted and handled with the help of a container crane 20 between the ship 15 and the land 21.

The underlying idea is for the frame 5 to be capable of being collapsed when not in use, so that a number of collapsed frames 5 can be stacked one on top of the other to save space on board ship or on land. The frame 5 is thus collapsible by means of a number of articulations between the stays, and it is capable of being stacked in its collapsed state on top of a subjacent load cassette 1.

An aforementioned frame 5 comprises a number of vertical uprights 22 and a number of horizontal struts 23, which are attached to one another at their points of intersection.

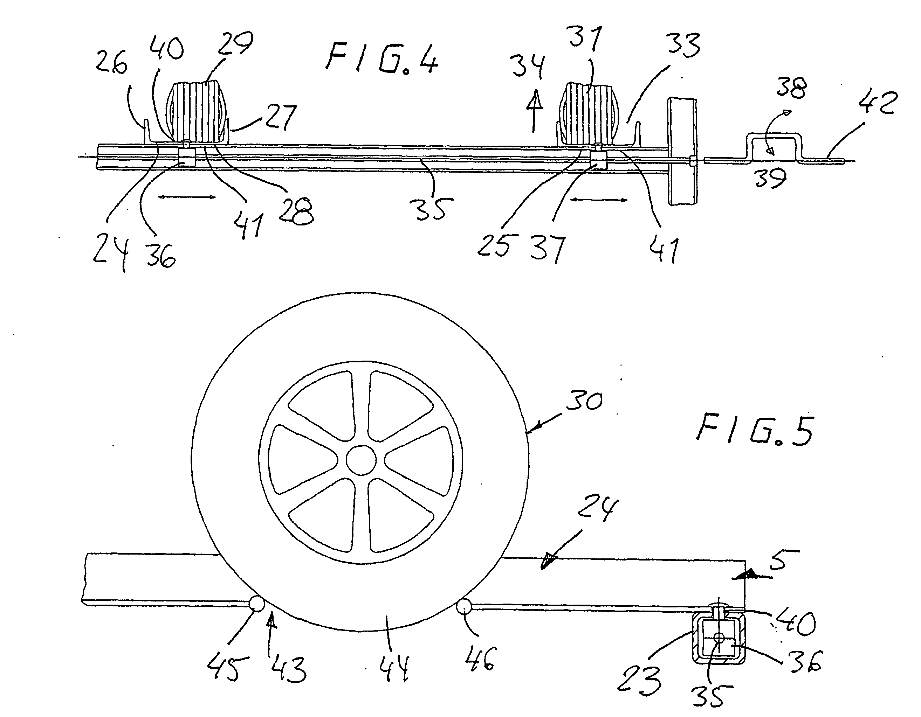

Also present is a number of wheel track beams 24, 25, which are so arranged as to interact with one another in pairs and are supported transversely by a number of the aforementioned struts 23. The aforementioned wheel track beams 24, 25 exhibit pairs of vertical side flanges 26, 27 extending from a downward-facing web 28, which rests on transverse struts 23. The aforementioned wheel track beams 24, 25 are so arranged as to be capable of displacement in pairs relative to one another, in conjunction with which the aforementioned wheel track beams 24, 25 in the transport position, see Fig. 4, are so arranged in pairs as to support respectively the left front and rear wheels 29, 30 and the right front and rear wheels 31, 32 of a car 4.

The aforementioned wheel track beams 24, 25 are preferably in the form of U-section beams or other similar open beams with side flanges 26, 27, and their opening 33 faces in a direction upwards 34. The wheel track beams 24, 25 are attached in pairs to a common threaded rod 35, and each of the connections between the aforementioned beams 24, 25 and the rod 35 is constituted by a nut 36, 37, which nuts are provided with a left-hand thread and a right-hand thread respectively, and the aforementioned rod 35 is so arranged as to be capable of being caused to rotate in the desired direction of rotation 38, 39.

A saving in weight is achieved in this way, and instead of having a traditional car deck, which could naturally also be used in a traditional way, or a platform, you essentially have U-300 beams 24, 25. Each of the transverse beams 24, 25 is attached to a respective supporting longitudinal strut 23 via a coach bolt 40 and a retainer in the form of an aforementioned threaded nut 36 inside the aforementioned strut 23. A slot 41 along the struts 23 in the area of the aforementioned beams 24, 25 permits the aforementioned beams 24, 25 to be displaced when the threaded shaft 35 is caused to rotate by a crank 42 or a motor.

By arranging one of the retainers with a left-hand thread and the other with a right-hand thread, the resulting effect is that the U-section beams move towards one another or away from one another when the screw is caused to rotate. This is performed appropriately with the help of a simple handle. Because the width between the wheels varies from car to car, it is thus possible to adjust the U-section beams simply by hand so that the sides of the beam are in contact with the tyres. It can now be said that the car is to some extent secured "lashed" in a fore-and-aft direction.

Each wheel track beam 24, 25 exhibits an opening 43 and/or a matching recess to accommodate the tread part 44 of a vehicle tyre. The aforementioned opening 43 and/or recess is provided with transverse front and rear protective edges 45, 46, which protect the tyres when these are driven down into and accommodated in the openings 43, so that the vehicle cannot be displaced in its longitudinal direction. The "ditch" formed in this way is intended only for the rear wheels of the vehicle in view of the variations in the wheelbase. If the distance from the edge of the frame to the "ditch" 43 is made to be suitable for a relatively large passenger car, it will also be suitable for smaller cars.

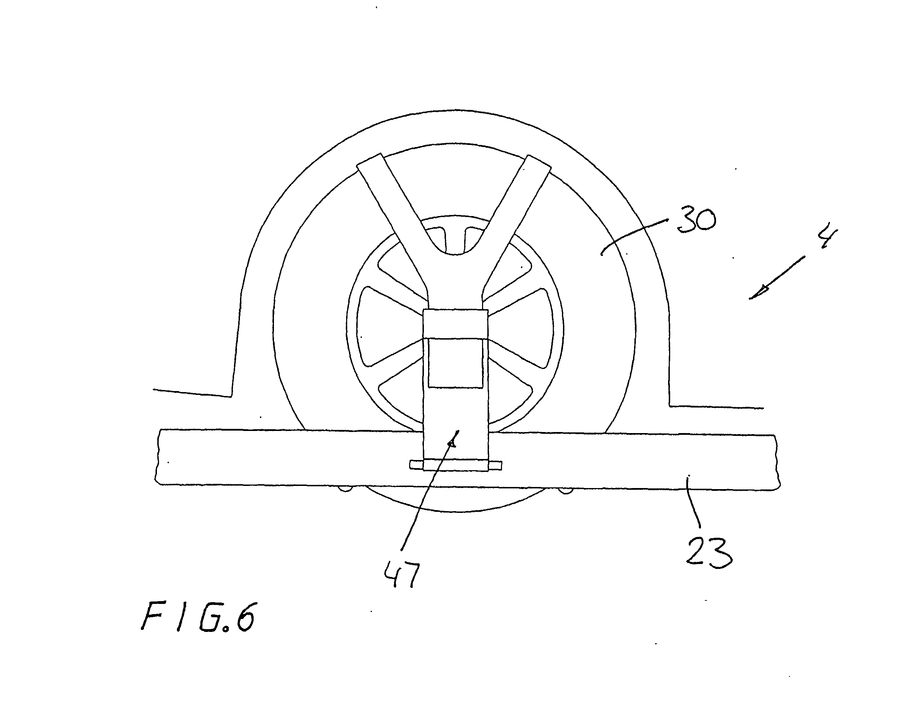

If such securing arrangements are not sufficient, it is possible to provide additional tyre locks, preferably a lock which functions like a modern snow chain, by means of which a strap is clamped down over the tyre, with the result that the car is secured as if in an iron grip. A tyre lock 47 of this kind is shown in Fig. 6 and is so arranged as to operate with a clamping function and is arranged in such a way as to be capable of attachment to the wheel track beams.

In the course of a study on a boat, it emerged that, as indicated above, it took eight minutes for a tugmaster to load a cassette. Let us assume that it would take as long to load a "car rack". There were five tugmasters in operation on this occasion. This means that 675 passenger cars would be loaded in one hour, and that damage to the vehicles would be reduced considerably.

The frame could also be used in so-called Lo-Lo cargo handling. Attached to the frame are container mountings, so-called "fittings", to permit the attachment of one or more car racks with the help of so-called snap locks on the lifting arrangement. The aforementioned arrangement also offers the possibility of stacking 40' containers or cargo arrangements vertically, with one of these on top of a subjacent container or cargo arrangement with a cassette and frame. The frame preferably has recesses to engage with the so-called "cell guides" of a container ship. The recesses in the frame are also provided to enable the container crane to grip with a standard 40' lifting yoke.

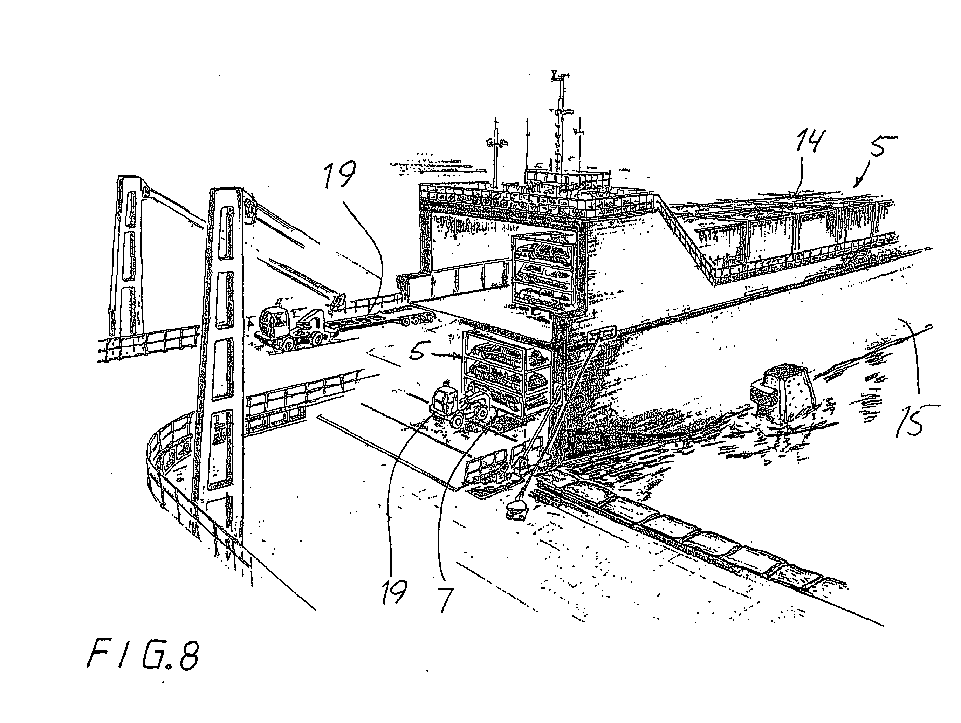

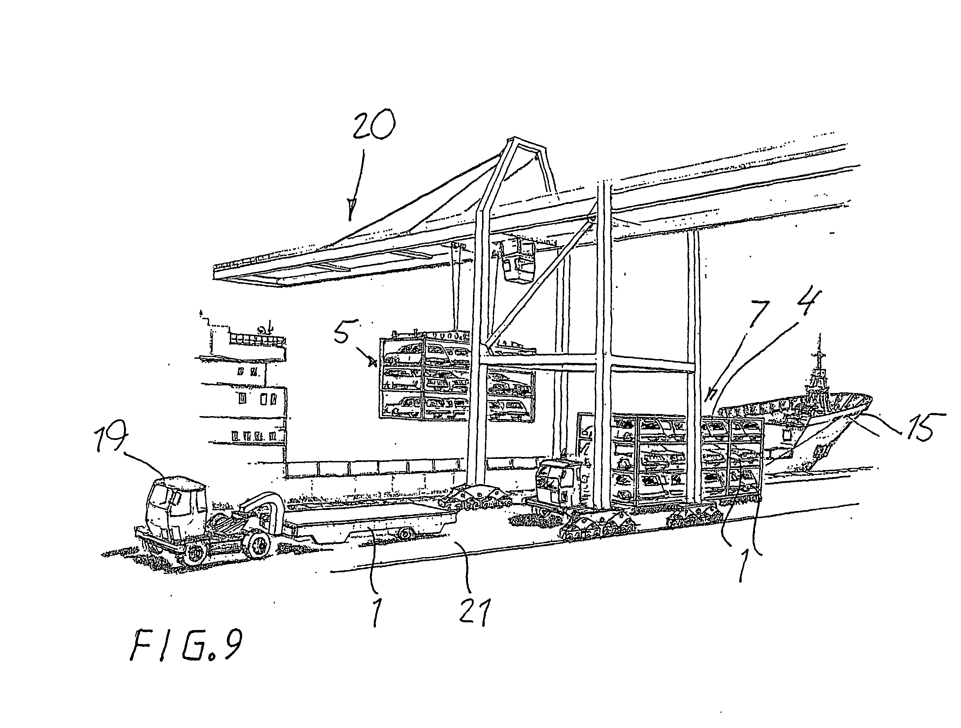

The function of the invention and the handling of cargo units 7 can be seen in Figs. 7-10 in the drawings. The invention is also not restricted to what is illustrated and described above, but may be varied within the scope of the Claims without departing from the idea of invention.

## Claims

1. A system for loading and unloading vehicles (4) in conjunction with transport of the vehicles (4) by means of ships (15) or other vessels or transport vehicles,
***characterized in that*** supported on a cargo cassette (1) is a frame (5), which comprises at least two levels (6, 6A, 6B) for accommodating vehicles (4) standing thereon transversely to the longitudinal direction of the cargo cassette, **in that** the sides (8-11) and roof (12) of the frame (5) exhibit protective covering (14), **in that** openings (13-13B) for vehicles (4) are present in the frame (5) along its long sides (8, 9) which face away from one another, **in that** the width (B) of the frame (5) is equivalent to double the width of a standard cassette, **in that** the length (L) of the frame (5) is essentially equivalent to the length of a standard cassette, and **in that** ramps (16-18) extend from the sides (8, 9) of the frame (5) up to the respective level (6, 6A, 6B) of the frame (5) to permit vehicles (4¹) intended for loading to be driven up onto, and loaded vehicles (4) to be driven down from the frame (5) and its respective vehicle accommodating points (I, II, III).

2. System in accordance with Patent Claim 1, ***characterized in* that** three levels (6, 6A, 6B) for accommodating vehicle cargo are present in the frame (5).

3. System in accordance with one or other of Patent Claims 1-2, ***characterized in* that** the frame (5) is collapsible and is so arranged as to be capable of being stacked on top of a subjacent load cassette (1).

4. System in accordance with one or other of Patent Claims 1-3, ***characterized in that*** the frame (5) comprises a number of vertical uprights (22) and a number of horizontal struts (23), and **in that** a number of the struts (23) is so arranged as to support transverse wheel track beams (24, 25).

5. System in accordance with Patent Claim 4, ***characterized in that*** the wheel track beams (24, 25) exhibit vertical side flanges (26, 27) and are so arranged as to be capable of displacement in pairs relative to one another, in conjunction with which the aforementioned wheel track beams (24, 25) are so arranged in pairs as to support respectively the left front and rear wheels (29, 30) and the right front and rear wheels (31, 32).

6. System in accordance with Patent Claim 5, ***characterized in that*** the wheel track beams (24, 25) are in the form of U-section beams or other similar open beams with side flanges (26, 27) and an opening (33) facing in a direction upwards (34).

7. System in accordance with one or other of Patent Claims 5-6, ***characterized in that*** the wheel track beams (24, 25) are attached in pairs to a common threaded rod (35), **in that** each of the connections between the aforementioned beams (24, 25) and the rod (35) is constituted by a nut (36, 37) with a left-hand thread and a right-hand thread respectively, and **in that** the aforementioned rod (35) is so arranged as to be capable of being caused to rotate in the desired direction of rotation (38, 39).

8. System in accordance with one or other of Patent Claims 4-7, ***characterized in that*** each wheel track beam (24, 25) exhibits an opening (43) and/or a matching recess to accommodate the tread part (44) of a vehicle tyre.

9. System in accordance with Patent Claim 8, ***characterized in that*** the opening (43) and/or recess is provided with transverse protective edges (45, 46) for the vehicle tyres, for example round bars.

10. System in accordance with one or other of Patent Claims 4-9, ***characterized in that*** tyre locks (47), which are so arranged as to lock vehicle tyres to the aforementioned wheel track beam and are so arranged as to operate with a clamping function, are so arranged as to be capable of attachment to the wheel track beams (24, 25).

## Patentansprüche

1. System zum Beladen und Entladen von Fahrzeugen (4) in Verbindung mit dem Transport der Fahrzeuge (4) mittels Schiffen (15) oder anderen Wasser- oder Transportfahrzeugen,
**dadurch gekennzeichnet, dass**
an einer Frachtkassette (1) unterstützt ein Rahmen (5) vorhanden ist, der zumindest zwei Ebenen (6, 6A, 6B) zur Aufnahme von Fahrzeugen (4) umfasst, die darauf quer zur Längsrichtung der Frachtkassette stehen, dass die Seiten (8-11) und das Dach (12) des Rahmens (5) eine Schutzhülle (14) aufweisen, dass Öffnungen (13-13B) für Fahrzeuge (4) in dem Rahmen (5) längs seiner Langseiten (8, 9) vorhanden sind, die voneinander weg weisen, dass die Breite (B) des Rahmens (5) dem Doppelten der Breite einer Standardkassette entspricht, dass die Länge (L) des Rahmens (5) im Wesentlichen der Länge einer Standardkassette entspricht, und dass sich Rampen (16-18) von den Seiten (8, 9) des Rahmens (5) bis zu der jeweiligen Ebene (6, 6A, 6B) des Rahmens (5) erstrecken, damit Fahrzeuge (4¹), die geladen werden sollen, auf den Rahmen (5) und dessen jeweilige Fahrzeugaufnahmepunkte (I, II, III) gefahren und geladene Fahrzeuge (4) von diesen heruntergefahren werden können.

2. System nach Anspruch 1,
**dadurch gekennzeichnet, dass**
in dem Rahmen (5) drei Ebenen (6, 6A, 6B) zur Aufnahme von Fahrzeugfracht vorhanden sind.

3. System nach einem der Ansprüche 1 bis 2,
**dadurch gekennzeichnet, dass**
der Rahmen (5) zusammenklappbar ist und derart eingerichtet ist, dass er auf eine darunter liegende Ladekassette (1) gestapelt werden kann.

4. System nach einem der Ansprüche 1 bis 3,
**dadurch gekennzeichnet, dass**
der Rahmen (5) eine Anzahl vertikaler Pfosten (22) und eine Anzahl horizontaler Streben (23) umfasst, und dass eine Anzahl der Streben (23) derart angeordnet ist, dass sie quer verlaufende Radschienenträger (24, 25) trägt.

5. System nach Anspruch 4,
**dadurch gekennzeichnet, dass**
die Radschienenträger (24, 25) vertikale Seitenschenkel (26, 27) aufweisen, die derart angeordnet sind, dass sie paarweise relativ zueinander verschiebbar sind, und dass in Verbindung mit diesen die vorstehend genannten Radschienenträger (24, 25) paarweise derart angeordnet sind, dass sie jeweils die linken vorderen und hinteren Räder (29, 30) und die rechten vorderen und hinteren Räder (31, 32) unterstützen.

6. System nach Anspruch 5,
**dadurch gekennzeichnet, dass**
die Radschienenträger (24, 25) in der Form von U-Trägern oder anderen ähnlichen offenen Trägern mit Seitenschenkeln (26, 27) und einer in Richtung nach oben (34) gewandten Öffnung (33) vorliegen.

7. System nach einem der Ansprüche 5 bis 6,
**dadurch gekennzeichnet, dass**
die Radschienenträger (24, 25) paarweise an einer gemeinsamen Gewindestange (35) angebracht sind, dass jede der Verbindungen zwischen den vorstehend genannten Trägern (24, 25) und der Stange (35) durch eine Mutter (36, 37) mit einem Linksgewinde bzw. einem Rechtsgewinde gebildet ist, und dass die vorstehend genannte Stange (35) derart angeordnet ist, dass sie in der gewünschten Drehrichtung (38, 39) in Rotation versetzt werden kann.

8. System nach einem der Ansprüche 4 bis 7,
**dadurch gekennzeichnet, dass**
jeder Radschienenträger (24, 25) eine Öffnung (43) und/oder eine passende Ausnehmung zur Aufnahme des Laufflächenteils (44) eines Fahrzeugreifens aufweist.

9. System nach Anspruch 8,
**dadurch gekennzeichnet, dass**
die Öffnung (43) und/oder Ausnehmung mit quer angeordneten Schutzrändem (45, 46) für die Fahrzeugreifen, beispielsweise runden Stäben, versehen ist.

10. System nach einem der Ansprüche 4 bis 9,
**dadurch gekennzeichnet, dass**
Reifenschlösser (47), die derart angeordnet sind, dass sie Fahrzeugreifen an dem vorstehend genannten Radschienenträger verriegeln, und die derart angeordnet sind, dass sie mit einer Klemmfunktion wirken, derart angeordnet sind, dass sie an den Radschienenträgern (24, 25) anbringbar sind.

## Revendications

1. Système pour le chargement et le déchargement de véhicules (4) à utiliser pour le transport de ces véhicules (4) à l'aide de bateaux (15) ou d'autres navires ou véhicules de transport, **caractérisé par** un châssis (5) soutenu par une cassette de transport (1), qui comporte au moins deux niveaux (6, 6A, 6B) pour le logement des véhicules (4) reposant sur ces niveaux transversalement à la direction longitudinale de la cassette de transport, en ce que les côtés (8-11) et le toit (12) du châssis (5) comportent une couverture de protection (14), en ce que le châssis (5) présente pour des véhicules (4) des ouvertures (13-13B) en regard s'étendant le long de ses grands côtés (8, 9), en ce que la largeur (B) du châssis (5) est telle qu'elle représente le double de la largeur d'un châssis standard, en ce que la longueur (L) du châssis (5) est essentiellement équivalente à la longueur d'un châssis standard, et en ce que des rampes (16-18) s'étendent des côtés (8, 9) du châssis (5) jusqu'au niveau respectif (6, 6A, 6B) du châssis (5) pour permettre aux véhicules (4 1) destinés à être chargés d'y accéder en montant et à ceux chargés de quitter en descendant le châssis (5) et ses points respectifs de logement (I, II, III).

2. Système selon la revendication 1, **caractérisé en ce que** trois niveaux (6, 6A, 6B) sont prévus dans le châssis (5) pour le transport de la charge routière.

3. Système selon l'une ou l'autre des revendications 1-2, **caractérisé en ce que** le châssis (5) est repliable et prévu pour être empilé sur une cassette inférieure de transport (1).

4. Système selon l'une ou l'autre revendications 1-3, **caractérisé en ce que** le châssis (5) comporte plusieurs montants (22) et plusieurs traverses horizontales (23), et **en ce qu'**un certain nombre de traverses (23) sont disposées de façon à soutenir des supports transversaux (24, 25) de piste de roulage pour les roues.

5. Système selon la revendication 4, **caractérisé en ce que** les supports transversaux (24, 25) présentent des ailes verticales latérales (26, 27) et sont ainsi prévus déplaçables par paires l'une par rapport à l'autre, lesdits supports transversaux de piste de roulage étant disposés par paires de façon à coopérer pour supporter respectivement les roues avant et arrière gauches (29, 30) et les roues avant et arrière droites (31, 32).

6. Système selon la revendication 5, **caractérisé en ce que** les supports transversaux de piste de roulage (24, 25) sont des profilés de section en U ou d'autres profilés semblables à section ouverte avec des ailes latérales (26, 27) et une ouverture (33) regardant vers le haut (34).

7. Système selon l'une ou l'autre revendications 5-6, **caractérisé en ce que** les supports transversaux de piste de roulage (24, 25) sont fixés par paires à une tige filetée commune (35), **en ce que** chacun des raccordements entre lesdits supports transversaux (24, 25) et la tige (35) est constitué par un écrou (36, 37) respectivement à filet gauche et à filet droit, et **en ce que** ladite tige (35) est prévue pour être pivotée dans la direction désirée de pivotement (38, 39).

8. Système selon l'une ou l'autre revendications de 4 à 7, **caractérisé en ce que** chaque support transversal de piste de roulage (24, 25) présente une ouverture (43) et/ou une cavité adaptée pour assurer le logement de la bande de roulement (44) d'un pneu de véhicule.

9. Système selon la revendication 8, **caractérisé en ce que** l'ouverture (43) et/ou la cavité est pourvue de bords protecteurs transversaux (45, 46) pour les pneus de véhicules, par exemple des barres rondes.

10. Système selon l'une ou l'autre revendications de 4 à 9, **caractérisé par** des bloqueurs de pneus (47), prévus pour immobiliser les pneus de véhicules audit support transversal de piste de roulage, ceux-ci présentant une fonction de pincement et prévus pour se fixer aux supports transversaux de piste de roulage (24, 25).
